# EUROPEAN PATENT APPLICATION

(11) **EP 1 802 097 A1**
(43) Date of publication of application: **27.06.2007**
(21) Application number: 06252656.1
(22) Date of filing: 22.05.2006
(51) Int. Cl.: H04N 1/409, G06T 5/00, G06T 5/20

(54) **Image processing circuit and method for reducing noise**

(30) Priority: 20.12.2005 JP 2005366969
(71) Applicant: Fujitsu Ltd., Kawasaki-shi, Kanagawa 211-8588 (JP)
(72) Inventor: Watarai, Yuji Fujitsu VLSI Limited, Kasugai-shi Aichi 487-0013 (JP); Fukuoka, Tomohiro Fujitsu VLSI Limited, Kasugai-shi Aichi 487-0013 (JP)
(74) Representative: Hitching, Peter Matthew

(57) **Abstract**

An image processing circuit for eliminating noise from an image without lowering the actual resolution. The image contains input pixels, which include a processing subject pixel (P11) and proximal pixels (POO-P02, P10, P12, P20-P22) located proximal to the processing subject pixel. Each input pixel has a pixel value. The image processing circuit includes a spatial filter (11) for generating a filter value (F11) for the subject processing pixel based on the pixel values of the input pixels and first filter coefficients (K00-K22). A correction circuit (12, 13, 14, 15) compares the filter value with first and second limit values (Vhi, Vlow) and corrects the filter value based on the comparison to generate a corrected filter value (F11a) in a range between the first and second limit values. The image processing circuit eliminates noise from the image by correcting the pixel value of the processing subject pixel based on the corrected filter value.

## Description

The present invention relates to an image processing circuit and method, and more particularly, to a circuit and method for reducing noise in an image without lowering the actual resolution (visual perception of resolution).

The quantity of pixels in imaging devices has been increasing over the years. This has reduced the area of each pixel and lowered the signal level (voltage, current) output by each pixel. As a result, the signal-to-noise (S/N) ratio has decreased. Accordingly, it is desired that the noise in an image be decreased without the resolution being lowered.

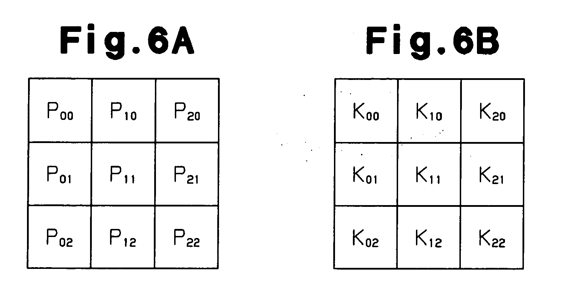

Japanese Laid-Open Patent Publication No. 2003-259126 describes a method for eliminating noise from image data with a spatial filter circuit. The spatial filter circuit uses a coefficient table including pixel values of a plurality of pixels in a predetermined area (3x3) laid out about a processing subject pixel P11 (refer to Fig. 6A), the size corresponding to the predetermined area, and a coefficient table including a plurality of filter coefficients K00 to K22 (refer to Fig. 6B). The spatial filter circuit multiplies the pixel values of the pixels P00 to P22 by the filter coefficients K00 to K22, respectively. Based on the products, the spatial filter circuit then calculates a filter value, which is employed as the pixel value for pixel P11. Each coefficient in the coefficient table is set in accordance with a correction method.

A median filter is known as a spatial filter circuit. The median filter compares the pixel values of a plurality of pixels, which are laid out in a predetermined area (3×3, 5×5, ...) about a processing subject pixel P11, with one another. Then, the median filter sets the median value of the pixel values as a filter value and employs the filter value as the pixel value for the processing subject pixel P11.

In the prior art method, even if the computed filter value differs greatly from the original pixel value of the processing subject pixel, the original pixel value is replaced by the filter value. This is perceived as blurring at edges of the original image or as a decrease in the resolution of the original image. In other words, the noise elimination of the prior art lowers the actual resolution of the original image.

Accordingly, it is a consideration of the present invention to provide an image processing circuit and method for reducing noise without lowering the actual resolution.

In one embodiment of the present invention, there is provided an image processing circuit for eliminating noise from an image. The image contains a plurality of input pixels including a processing subject pixel and a plurality of proximal pixels located proximal to the processing subject pixel, with each input pixel having a pixel value. The image processing circuit includes a spatial filter for generating a filter value for the subject processing pixel based on the pixel values of the input pixels and a plurality of first filter coefficients. A correction circuit compares the filter value with a first limit value and a second limit value and correcting the filter value based on the comparison result to generate a corrected filter value in a range between the first limit value and the second limit value. The image processing circuit eliminates noise from the image by correcting the pixel value of the processing subject pixel based on the corrected filter value.

According to a second embodiment of the present invention, there is provided an image processing method for eliminating noise from an image. The image contains a plurality of input pixels including a processing subject pixel and a plurality of proximal pixels located proximal to the processing subject pixel, with each input pixel having a pixel value. The method includes generating a filter value for the subject processing pixel with a spatial filter based on the pixel values of the input pixels and a plurality of first filter coefficients, comparing the filter value with a first limit value and a second limit value and correcting the filter value based on the comparison result to generate a corrected filter value in a range between the first limit value and the second limit value with a correction circuit, and eliminating noise from the image by correcting the pixel value of the processing subject pixel based on the corrected filter value.

A detailed description of the present invention will now be given, by way of example, with reference to the accompanying drawings, in which:
Fig. 1 is a circuit diagram of an image processing circuit according to a first embodiment of the present invention;
Fig. 2A is an explanatory diagram of input image data;
Fig. 2B is an explanatory diagram of a coefficient table;
Fig. 3 is a circuit diagram of an image processing circuit according to a second embodiment of the present invention;
Fig. 4A is an explanatory diagram of input image data;
Figs. 4B and 4C are explanatory diagrams of a coefficient table;
Fig. 5 is a circuit diagram of an image processing circuit according to a further embodiment of the present invention;
Fig. 6A is an explanatory diagram of input image data; and
Fig. 6B is an explanatory diagram of a coefficient table.

Image processing according to a first embodiment of the present invention will now be described.

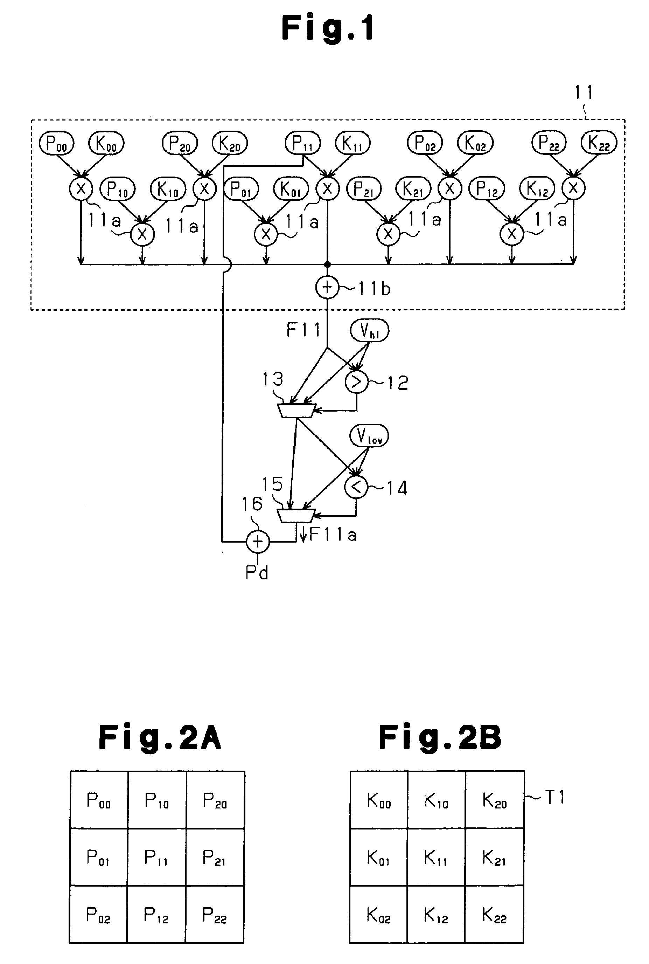

Referring to Fig. 1, the image processing circuit of the first embodiment includes a spatial filter circuit 11, which serves as a spatial filter. Pixel values of a predetermined number (e.g., 3x3) of input pixels P00 to P22 shown in Fig. 2A and a plurality of filter coefficients (first filter coefficients) K00 to K22 of a coefficient table T1 shown in Fig. 2B are input to the spatial filter circuit 11. The coefficient table T1 is stored in, for example, a storage device such as a ROM, and the filter coefficients K00 to K22 are positive or negative values. In Fig. 2A, pixel P11, which is located in the center of input pixels P00 to P22, is the processing subject pixel. Further, pixels P00 to P02, P10, P12, and P20 to P22, which are located in the proximity of the pixel P11, are defined as proximal pixels. In the preferred embodiment, the proximal pixels are adjacent to the processing subject pixel.

The spatial filter circuit 11 includes multipliers 11a, the quantity (e.g., nine) of which corresponds to the quantity of input pixels, and an adder 11b, which is connected to the multipliers 11a. Each multiplier 11a multiplies the pixel value of the input pixel by the corresponding filter coefficient and outputs the product (computation result). For example, the leftmost multiplier 11a in Fig. 1 multiplies the pixel value of pixel P00, which is located at the upper left corner in Fig. 2A, by the filter coefficient K00, which is located at the upper left corner in Fig. 2B. The adder 11b adds the products of every one of the multipliers 11a to generate a filter value F11 for pixel P11. The filter value F11 is provided to a first comparator 12 and a first selection circuit 13.

An upper limit value Vhi, which is stored beforehand in a storage device as a first limit value, is input to the first comparator 12. The upper limit value Vhi is a positive value. The first comparator 12 compares the filter value F11 with the upper limit value Vhi and outputs a comparison result signal, which indicates whether or not the filter value F11 is greater than the upper limit value Vhi.

The filter value F11 and the upper limit value Vhi are input to the first selection circuit 13. The first selection circuit 13 selectively outputs either one of the filter value F11 or the upper limit value Vhi in accordance with the comparison result of the first comparator 12. For example, the first selection circuit 13 outputs the upper limit value Vhi when the filter value F11 is greater than the upper limit value Vhi and outputs the filter value F11 when the filter value F11 is not greater than the upper limit value Vhi. The output value of the first selection circuit 13 is input to the second comparator 14 and the second selection circuit 15. The output value of the first selection circuit 13 is input to a second comparator 14 and a second selection circuit 15.

A lower limit value Vlow, which is stored beforehand in a storage device as a second limit value, is input to the second comparator 14. The lower limit value Vlow is a negative value. The second comparator 14 compares the output value of the first selection circuit 13 with the lower limit value Vlow and outputs a comparison result signal, which indicates whether or not the output value is less than the lower limit value Vlow. The first comparator 12 and the second comparator 14 cooperate to indicate the relationship of the filter value F11, the upper limit value Vhi, and the lower limit value Vlow in terms of level.

The output value of the first selection circuit 13 and the lower limit value Vlow are input to the second selection circuit 15. In accordance with the comparison result of the second comparator 14, the second selection circuit 15 selectively outputs either one of the output value of the first selection circuit 13 or the lower limit value Vlow. For example, the selection circuit 15 outputs the lower limit value Vlow when the output value of the first selection circuit 13 is less than the lower limit value Vlow and outputs the output value of the first selection circuit 13 when the output value of the first selection circuit 13 is not less than the lower limit value Vlow.

The first selection circuit 13, the second comparator 14, and the second selection circuit 15 function as a correction circuit for correcting the filter value F11 to a value included in a tolerable range between the upper limit value Vhi through the lower limit value Vlow. When the filter value F11 is greater than the upper limit value Vhi, the upper limit value Vhi is output from the correction circuit as a corrected filter valued F11a. When the filter value F11 is less than the lower limit value Vlow, the lower limit value Vlow is output from the correction circuit as the corrected filter valued F11a. Otherwise, the filter value F11 is output from the correction circuit as the corrected filter value F11a.

The pixel value of pixel P11 and the corrected filter value F11a are provided to an adder 16. The adder 16 adds the corrected filter value F11a to the pixel value of pixel P11 to generate and output a corrected pixel value Pd. The corrected pixel value Pd is stored as the pixel value for the processing subject pixel P11.

In comparison with the original pixel value of the pixel P11, noise is reduced in the pixel value Pd. The difference between the pixel value Pd and the original pixel value of pixel P11 ranges from the upper limit value Vhi, at the positive side, through the lower limit value Vlow, at the negative side. In this manner, the difference between the pixel value Pd and the original pixel value of pixel P11 is restricted. This prevents the actual resolution of an image from decreasing. Thus, blurring does not occur at edges of an image.

The first embodiment has the advantages described below.
(1) The spatial filter circuit 11 generates the filter value from the pixel values of the input pixels P00 to P22, which include the processing subject pixel, and the filter coefficients K00 to K22. The correction circuit, which includes the first comparator 12, the first selection circuit 13, the second comparator 14, and the second selection circuit 15, corrects the filter value F11 to a value between the upper limit value Vhi and the lower limit value Vlow. The corrected value is used to correct the original pixel value of the processing subject pixel P11. This eliminates noise and prevents the corrected pixel value from differing greatly from the original pixel value. Thus, the actual resolution is prevented from being decreased.
(2) In an image processing circuit that adds the corrected filter value F11a to the pixel value of the pixel P11, which is the processing subject, and generates a new, or corrected, pixel value, noise is eliminated and the actual resolution is prevented from being decreased.

An image processing according to a second embodiment of the present invention will now be discussed. Like or same reference numerals are given to those components that are the same or similar in the first embodiment.

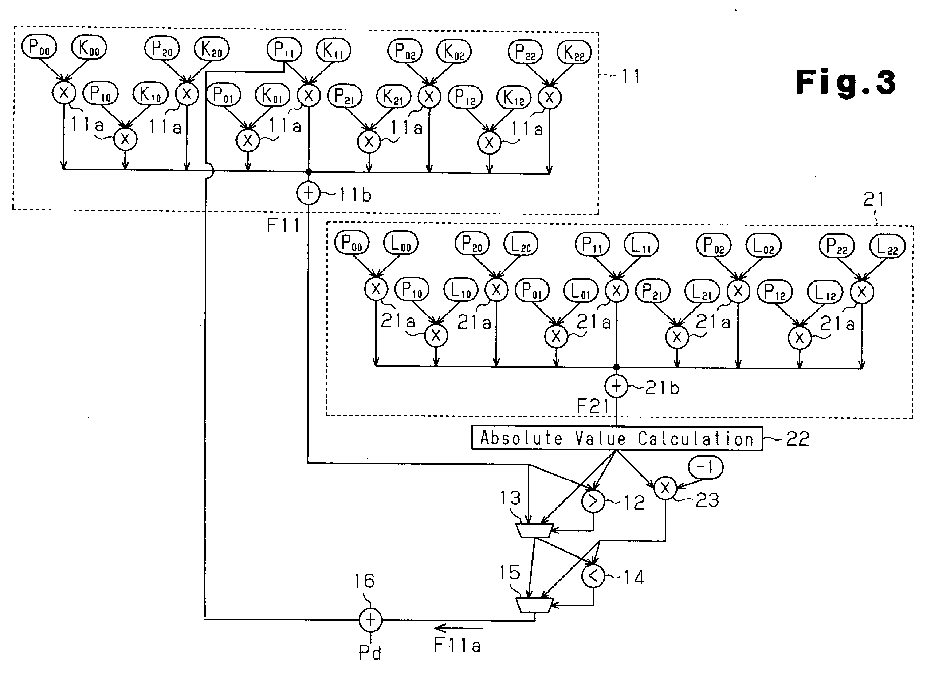

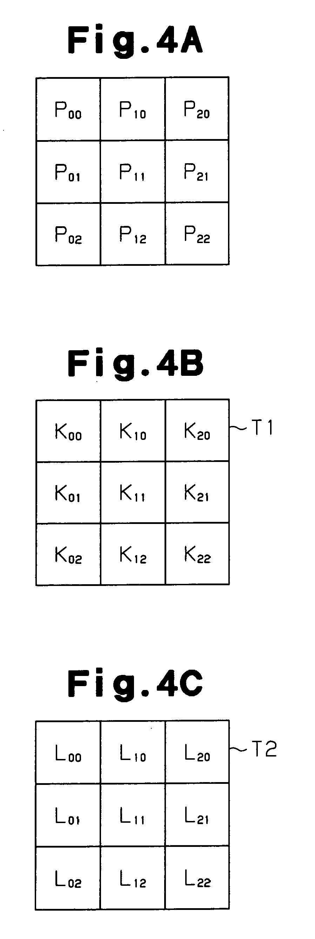

Referring to Fig. 3, an image processing circuit of the second embodiment includes a first spatial filter circuit 11 and a second spatial filter circuit 21. The first spatial filter circuit 11, which is substantially identical to that of the first embodiment, generates a first filter value F11 from pixel values of a predetermined number (e.g., 3x3) of input pixels P00 to P22 shown in Fig. 4A and a plurality of filter coefficients (first filter coefficients) K00 to K22 of a first coefficient table T1 shown in Fig. 4B.

In the same manner as the first spatial filter circuit 11, pixel values of pixels P00 to P22 are input to the second spatial filter circuit 21. Further, second filter coefficients L00 to L22 of a second coefficient table T2 shown in Fig. 4C are input to the spatial filter circuit 21. The second coefficient table T2 is stored in, for example, a storage device such as a ROM, and the filter coefficients L00 to L22 are positive or negative values.

The second spatial filter circuit 21 includes multipliers 21a, the quantity (e.g., nine) of which corresponds to the quantity of input pixels, and an adder 21b. Each multiplier 21a multiplies the pixel value of the input pixel by the corresponding second filter coefficient and outputs the product (computation result). For example, the leftmost multiplier 21a in Fig. 3 multiplies the pixel value of pixel P00, which is located at the upper left corner in Fig. 4A, by the second filter coefficient L00, which is located at the upper left corner in Fig. 4C. The adder 21b adds the products of every one of the multipliers 21a to generate a second filter value F21 for pixel P11. The second filter value F21 is provided to an absolute value computation circuit 22.

The absolute value computation circuit 22 computes the absolute value of the second filter value F21 and provides the absolute value as a first limit value, or an upper limit value Vhi, to a first comparator 12, a first selection circuit 13, or a multiplier 23.

The multiplier 23 generates a lower limit value, which is a negative value. The multiplier 23 multiplies the output value of the absolute value computation circuit 22 by a negative fixed value "-1" to generate a lower limit value Vlow, which serves as a second limit value. Then, the multiplier 23 provides the lower limit value Vlow to the second comparator 14. The absolute value computation circuit 22 and the multiplier 23 function as a circuit for computing the upper limit value and the lower limit value.

The image processing circuit of the second embodiment computes the upper and lower limit values of the first filter value F11 from the pixel values of the pixels P11 to P22 and the second filter coefficients L00 to L22 of the second coefficient table T2.

The second filter coefficients L00 to L22 of the second coefficient table T2 are set so that the second filter value F21 is small when significant or meaningful image information, such as an edge, is included near the processing subject pixel P11. If the difference between the pixel values P00 to P22 including the processing subject pixel is small, that is, at meaningless image portions that are flat and have no features, the second filter coefficients L00 to L22 are set so that the second filter value F21 is large.

Accordingly, the image processing circuit dynamically varies the variable range of the first filter value F11, that is, the upper and lower limit values of the first filter value F11, based on the pixel values of the processing subject pixel P11 and the proximal pixels (adjacent pixels) located in the proximity of the processing subject pixel P11. Thus, the original image information is held at significant or meaningful image portions, and noise is effectively eliminated from meaningless image portions that are flat and have no features.

In addition to the advantages of the first embodiment, the second embodiment has the advantages described below.
(1) The second spatial filter circuit 21 generates the second filter value F21 for the processing subject pixel P11 based on the pixel values of the pixels P11 to P22 including the processing subject pixel and the second filter coefficients L00 to L22. The absolute value computation circuit 22 computes the upper limit value Vhi based on the second filter value F21, and the multiplier 23 generates the lower limit value Vlow based on the upper limit value Vhi. As a result, the upper limit value Vhi and the lower limit value Vlow are dynamically set in accordance with the pixel values of the pixels P00 to P22. Thus, original image information at significant portions may be held to prevent the actual resolution from being lowered.

It should be apparent to those skilled in the art that the present invention may be embodied in many other specific forms without departing from the spirit or scope of the invention. Particularly, it should be understood that the present invention may be embodied in the following forms.

In the above embodiments, the spatial filter circuits 11 and 21 have an input pixel quantity of 3×3 pixels. However, the quantity of the pixels surrounding the processing subject pixel may be changed to, for example, 5x5 or 7x7.

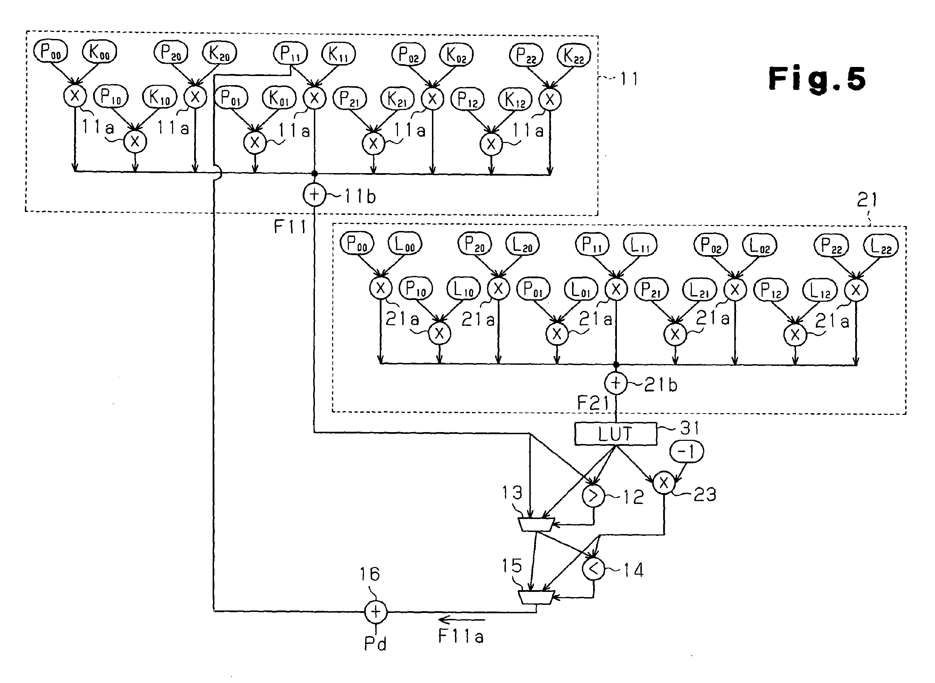

In the second embodiment, the computation circuit for setting the upper limit value and the lower limit value is configured by the absolute value computation circuit 22 and the multiplier 23. However, the computation circuit 22 may be configured by a look-up table (LUT) 31 and a multiplier 23 (refer to Fig. 5).

In the second embodiment, the quantity of the input pixels in the first spatial filter circuit 11 may differ from that of the second spatial filter circuit 21.

In the second embodiment, the sign of the upper limit value is inverted to set the lower limit value. However, the upper and lower limit values may be separately set. For example, the fixed value input to the multiplier 23 may be set to a value other than "-1". Further, a third spatial filter circuit may be used, and an LUT used for reference may be changed.

Other types of spatial filters, such as a versatile spatial filter or a median filter, may be used. Further, the spatial filter is not limited to hardware and may be software.

In the above embodiments, the filter value generated by the spatial filter circuit 11 is added to the original pixel value of the pixel P11 to generate the pixel value Pd, which is employed as the new pixel value of the pixel P11. However, the present invention is not limited in such a manner. For example, the original pixel value of the processing subject pixel P11 may be replaced by the filter value generated by a spatial filter circuit, such as the output value of a second selection circuit. In this case, a first comparator compares the filter value with a value obtained by adding the upper limit value to the original pixel value, and a second comparator compares the output value of a first selection circuit with a value obtained by adding the lower limit value to the original pixel value.

The present examples and embodiments are to be considered as illustrative and not restrictive.

## Claims

1. An image processing circuit for eliminating noise from an image, wherein the image contains a plurality of input pixels including a processing subject pixel and a plurality of proximal pixels located proximal to the processing subject pixel, with each input pixel having a pixel value, the image processing circuit **characterized by**:
a spatial filter (11) for generating a filter value for the subject processing pixel based on the pixel values of the input pixels and a plurality of first filter coefficients; and
a correction circuit (12, 13, 14, 15) for comparing the filter value with a first limit value and a second limit value and correcting the filter value based on the comparison result to generate a corrected filter value in a range between the first limit value and the second limit value, the image processing circuit eliminating noise from the image by correcting the pixel value of the processing subject pixel based on the corrected filter value.

2. The image processing circuit according to claim 1, further **characterized by**:
an adder (16) for adding the corrected filter value to the pixel value of the processing subject pixel to generate a corrected pixel value of the processing subject pixel.

3. The image processing circuit according to claim 1 or 2, further **characterized by**:
a second spatial filter (21) for generating a second filter value for the processing subject pixel based on the pixel value of the processing subject pixel, the pixel values of the plurality of proximal pixels, and a plurality of second filter coefficients; and
a computation circuit (22, 23, 31) for computing the first limit value and the second limit value based on the second filter value.

4. The image processing circuit according to claim 1, wherein the plurality of proximal pixels are adjacent to the processing subject pixel.

5. The image processing circuit according to claim 1, wherein the plurality of first filter coefficients respectively correspond to the plurality of input pixels, the spatial filter including:
a plurality of multipliers (11a) for multiplying the pixel values of the plurality of input pixels respectively by the plurality of first filter coefficients to generate a plurality of products; and
an adder (11b), connected to the plurality of multipliers, for adding the products of the plurality of multipliers and generating the filter value for the processing subject pixel.

6. The image processing circuit according to claim 5, wherein the plurality of input pixels, the plurality of first filter coefficients, and the plurality of multipliers are in quantities that are the same.

7. An image processing method for eliminating noise from an image, wherein the image contains a plurality of input pixels including a processing subject pixel and a plurality of proximal pixels located proximal to the processing subject pixel, with each input pixel having a pixel value, the method comprising the steps of:
generating a filter value for the subject processing pixel with a spatial filter based on the pixel values of the input pixels and a plurality of first filter coefficients;
comparing the filter value with a first limit value and a second limit value and correcting the filter value based on the comparison result to generate a corrected filter value in a range between the first limit value and the second limit value with a correction circuit; and
eliminating noise from the image by correcting the pixel value of the processing subject pixel based on the corrected filter value.

8. The image processing method according to claim 7, wherein the step of eliminating noise from the image includes:
adding the corrected filter value to the pixel value of the processing subject pixel to generate a corrected pixel value for the processing subject pixel.

9. The image processing method according to claim 7 or 8, further comprising the steps of:
generating a second filter value for the processing subject pixel with a second spatial filter based on the pixel value of the processing subject pixel, the pixel values of the plurality of proximal pixels, and a plurality of second filter coefficients; and
computing the first limit value and the second limit value with a computation circuit based on the second filter value.

10. The image processing method according to claim 7, wherein the plurality of proximal pixels are adjacent to the processing subject pixel.
